# EUROPEAN PATENT SPECIFICATION

(11) **EP 2 857 957 B1**
(45) Date of publication and mention of the grant of the patent: **27.02.2019**
(21) Application number: 14187184.8
(22) Date of filing: 30.09.2014
(51) Int. Cl.: G06F 3/14

(54) **MASTER DEVICE, CLIENT DEVICE, AND SCREEN MIRRORING METHOD THEREOF**
MASTER-VORRICHTUNG, CLIENT-VORRICHTUNG UND BILDSCHIRMSPIEGELUNGSVERFAHREN DAFÜR
DISPOSITIF MAÎTRE, DISPOSITIF CLIENT ET SON PROCÉDÉ DE MIROITAGE D'ÉCRAN

(30) Priority: 04.10.2013 KR 20130118729
(43) Date of publication of application: 08.04.2015
(73) Proprietor: Samsung Electronics Co., Ltd., Gyeonggi-do 443-742 (KR)
(72) Inventor: BANG, Han-min, Gyeonggi-do (KR); JAMPANI, Naga ashok babu, Gyeonggi-do (KR); CHANG, Soo-ho, Seoul (KR)
(74) Representative: HGF Limited

(56) References cited:
- US-A1- 2012 306 737
- US-A1- 2013 135 179

## Description

### TECHNICAL FIELD

The present disclosure relates to a master device, a client device, and a screen mirroring method thereof. More particularly, the present disclosure relates to a screen mirroring method in which a client device mirrors and displays a screen displayed by a master device.

### BACKGROUND

With the advancement of a wired and/or wireless communication network, electronic devices that display output data visually recognizable by a user on a screen are connected to each other over the wired and/or wireless communication network.

The electronic devices transmit and receive various pieces of data over the wired and/or wireless communication network. One electronic device may remotely control the other electronic device, and one electronic device may be operated by using the other electronic device. Mirroring technology is needed for the above-described remote control and/or sharing between the electronic devices.

The mirroring technology is technology that enables devices including a display unit to share and manipulate screen data. The mirroring technology enables Personal Computers (PCs) to share and use screen data.

Moreover, the mirroring technology is being widely developed to be applied to all electronic devices, in which a display unit outputs a screen, such as portable computers such as notebook computers, netbook computers, and tablet PCs, portable terminals such as smartphones and Personal Digital Assistants (PDAs), and Televisions (TVs). A mirroring service, which enables a plurality of electronic devices to share a screen and to remotely control the other side, is provided by applying the mirroring technology to the plurality of electronic devices. Display as a Service (DaaS), Miracast, Airplay, and the like, were developed as technology for providing such a mirroring service.

Hereinafter, each electronic device that uses the mirroring service by sharing and displaying a screen is referred to as a display device.

In the mirroring service, a device providing an image transmits the image to a device receiving the image. The device providing the image may be referred to as a source device and/or a master device, and the device receiving the image may be referred to as a sink device and/or a client device. Hereinafter, the device providing the image is referred to as the master device, and the device receiving the image is referred to as the client device.

When intending to use the mirroring service, a plurality of the display devices transmit and receive image data corresponding to a displayed screen over a wired and/or wireless network.

In particular, in changing the mirroring screen, the master device newly generates and transmits high image-quality data based on a screen to be changed, and the client device receives the high image-quality data. A time delay in changing the mirroring screen may be experienced, and in the case of delay, a user may become bored.

US 2012/0306737 A1 discloses a system that drives a remote display from an electronic device. A region of interest in the remote display is identified based on user input and a usage context and graphical output from the electronic device to the remote display is prioritized based on the region of interest.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. The present invention is defined by the independent claims.

Accordingly, an aspect of the present disclosure is to provide a master device, a client device, and a screen mirroring method thereof, which quickly change and display a mirroring screen.

Additional aspects will be set forth in part in the description which follows and, in part, will be apparent from the description, or may be learned by practice of the presented embodiments.

In accordance with a first aspect a master device is provided. The master device comprises: a display unit; a memory; a control unit configured to: control the display unit to display a screen; acquire mirroring screen information that is information about a first region of the displayed screen, the first region being currently mirrored by a client device; generate high image-quality data of the first region using stored pixel data corresponding to the first region and based on the mirroring screen information; and generate low image-quality data of a second region of the displayed screen using stored pixel data corresponding to the second region and based on the mirroring screen information, the second region being a region of the screen which is not being currently mirrored by the client device; and a communication unit configured to transmit the high image-quality data and the low image-quality data to the client device.

In accordance with a second aspect a screen mirroring method is provided. The method comprises: displaying a screen; acquiring, by the master device, mirroring screen information that is information about a first region of the displayed screen, the first region being currently mirrored by a client device; generating, by the master device, high image-quality data of the first region using stored pixel information and based on the mirroring screen information; generating, by the master device, low image-quality data of a second region of the displayed screen using stored pixel data corresponding to the second region and based on the mirroring screen information, the second region being a region of the screen which is not currently being mirrored by the client device; and transmitting, by the master device, the high image-quality data and the low image-quality data to the client device.

In accordance with a third aspect a client device for mirroring a screen displayed by a master device is provided. The client device comprises: a display unit; a communication unit configured to: receive, from the master device, high image-quality data of a first region of a screen displayed at the master device, the first region being a region of the screen of the master device which is being currently mirrored by the client device; and receive, from the master device, low image-quality data of a second region of the screen displayed at the master device, the second region being a region of the screen of the master device which is not being currently mirrored by the client device; a control unit configured to generate a screen corresponding to the first region using the received high image-quality data; and control the display unit to display the screen corresponding to the first region.

Also disclosed is a master device. The master device includes a display unit configured to display a certain screen, a control unit configured to generate high image-quality data of a first region mirrored by a client device in the certain screen, and to generate low image-quality data of a second region which is not mirrored by the client device, and a communication unit configured to transmit the high image-quality data and the low image-quality data to the client device.

Also disclosed is a client device, which mirrors and outputs at least one screen displayed by at least one master device. The client device includes a communication unit configured to receive high image-quality data of a first region mirrored by the at least one client device, and to receive low image-quality data of a second region which is not mirrored by the at least one client device, a control unit configured to generate a screen corresponding to the first region, and a display unit configured to display the screen corresponding to the first region.

Also disclosed is a screen mirroring method. The method includes generating high image-quality data of a first region mirrored by a client device in a certain screen displayed by a master device, generating low image-quality data of a second region which is not mirrored by the client device, and transmitting the high image-quality data and the low image-quality data to the client device.

Also disclosed is a screen mirroring method is a method of displaying, by a client device, at least one screen displayed by at least one master device. The screen mirroring method includes receiving high image-quality data of a first region mirrored by the at least one client device, receiving low image-quality data of a second region which is not mirrored by the at least one client device, and displaying a screen corresponding to the first region by using the high image-quality data.

Other aspects, advantages, and salient features of the disclosure will become apparent to those skilled in the art from the following detailed description, which, taken in conjunction with the annexed drawings, discloses various embodiments of the invention defined by the independent claims.

### BRIEF DESCRIPTION OF THE DRAWINGS

The above and other aspects, features, and advantages of certain embodiments of the present disclosure will be more apparent from the following description taken in conjunction with the accompanying drawings, in which:
FIGS. 1A and 1B are diagrams illustrating an example of a mirroring connection;
FIGS. 2A and 2B are diagrams illustrating another example of a mirroring connection;
FIG. 3 is a diagram illustrating a display device according to an embodiment of the present disclosure;
FIGS. 4A and 4B are flowcharts illustrating a screen mirroring method;
FIG. 5 is a flowchart illustrating a screen mirroring method;
FIG. 6 is a diagram illustrating a detailed operation of the screen mirroring method;
FIG. 7 is a diagram illustrating a detailed operation of the screen mirroring method;
FIG. 8 is a flowchart illustrating a screen mirroring method according to an embodiment of the present disclosure;
FIG. 9 is a diagram illustrating a detailed operation of the screen mirroring method according to an embodiment of the present disclosure; and
FIG. 10 is a diagram illustrating a detailed operation of the screen mirroring method according to an embodiment of the present disclosure.

The same reference numerals are used to represent the same elements throughout the drawings.

### DETAILED DESCRIPTION

The following description with reference to the accompanying drawings is provided to assist in a comprehensive understanding of various embodiments of the present disclosure as defined by the claims. It includes various specific details to assist in that understanding but these are to be regarded as merely exemplary. Accordingly, those of ordinary skill in the art will recognize that various changes and modifications of the various embodiments described herein may be made without departing from the scope of the present as defined by the independent claims. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims.

It is to be understood that the singular forms "a," "an," and "the" include plural referents unless the context clearly dictates otherwise. Thus, for example, reference to "a component surface" includes reference to one or more of such surfaces.

Hereinafter, a screen mirroring method and a display device using the same according to an embodiment of the present disclosure will be described in detail with reference to the accompanying drawings.

A plurality of display devices may be connected to each other, and may remotely control and use the other side.

Examples of the plurality of display devices using a mirroring service include at least one master device and at least one client device. The at least one master device and the at least one client device are connected to each other over a wired/wireless network.

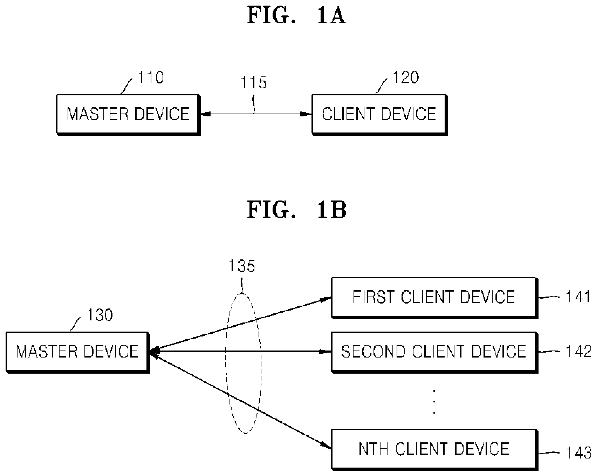

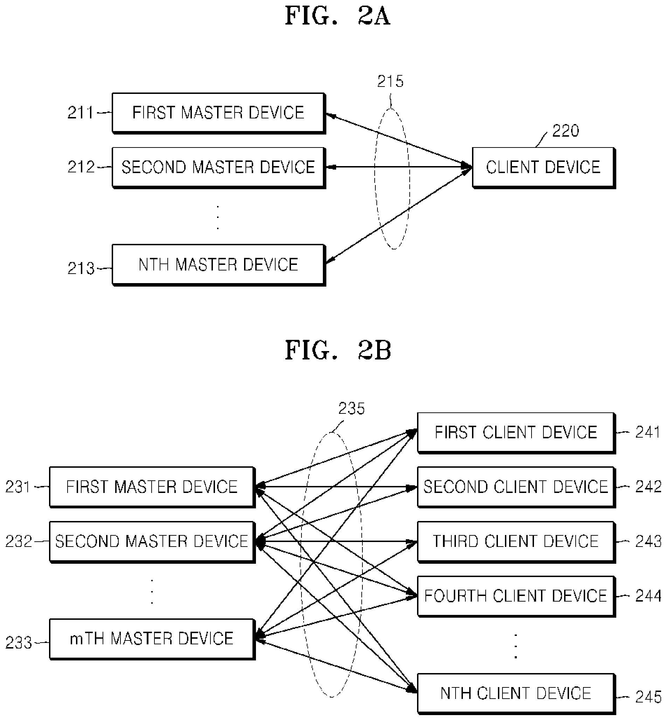

Hereinafter, a connection relation between the display device and the plurality of display devices using the mirroring service will be described with reference to FIGS. 1A, 1B, and 2. A display device illustrated in FIGS. 1A, 1B, and 2 is an electronic device including a display unit, and may be a portable computer such as a notebook computer, a netbook computer, or a tablet PC, a portable terminal such as a smartphone or a PDA, or a smart TV.

FIGS. 1A and 1B are diagrams illustrating an example of a mirroring connection.

Referring to FIG. 1A, a case in which at least one master device and at least one client device are connected to each other is illustrated as an example.

One master device 110 and one client device 120 are connected to each other in a 1:1 network topology. In detail, the master device 110 is connected to the client device 120 at a 1:1 network topology over a network 115.

The network 115 is a wired and/or wireless communication network for transmitting and receiving data. The network 115 may be established according to various communication network standards such as Local Area Network (LAN), Wide Area Network (WAN), Wireless LAN (Wi-Fi), Wireless broadband (Wibro), Code Division Multiple Access (CDMA), Wideband CDMA (WCDMA), and Near Field Communication (NFC).

The master device 110 may display a menu screen, used to control an operation of the master device, and a screen on which a image is reproduced. The master device 110 generates image data corresponding to a currently reproduced screen, and transmits the image data to the client device 120. In detail, the master device 110 may generate and transmit image data corresponding to a whole screen which is being currently reproduced, and may divide the currently reproduced screen to generate and transmit at least one divided screen.

The client device 120 receives image data, corresponding to a screen displayed by the master device 110, over the network 115. The client device 120 may decode the image data received from the master device to generate a screen, and display the generated screen.

In detail, the client device 120 receives a screen, displayed by the master device 110, as a single screen or a plurality of screens. The client device 120 may display a screen corresponding to the screen displayed by the master device 110 by using the image data received from the client device 120. In detail, the client device 120 may display an entirety or a portion of the screen displayed by the master device 110.

Referring to FIG. 1B, one master device and a plurality of client devices are connected to each other in a 1:n network topology. In detail, a master device 130 is connected to a plurality of client devices 141 to 143 in the 1:n network topology over a network 135.

The one master device 130 may copy a whole screen to transmit the copied screen to the plurality of client devices 141 to 143, copy a certain region of the screen to transmit the copied region, or may transmit different regions of the screen.

Referring to FIG. 1B, the same descriptions provided with regard to FIG. 1A are not repeated.

FIGS. 2A and 2B are diagrams illustrating another example of a mirroring connection.

In detail, FIG. 2A illustrates, as an example, a case in which a plurality of master devices and one client device are connected to each other.

Referring to FIG. 2A, a plurality of master devices 211 to 213 and one client device 220 are connected to each other in an n:1 network topology. In detail, the master devices 211 to 213 are connected to the client device 220 at the n:1 network topology over a network 215.

Each of the master devices 211 to 213 transmits image data to the one client device 220. The client device 220 may selectively display a screen corresponding to certain image data among a plurality of pieces of image data respectively received from the master devices 211 to 213. Also, the client device 220 may aggregate a plurality of images included in the received plurality of pieces of image data to generate one screen, and display the generated screen.

Referring to FIG. 2B, a plurality of master devices 231 to 233 and a plurality of client devices 241 to 245 are connected to each other in an m:n network topology. In detail, the master devices 231 to 233 are connected to the client devices 241 to 245 at the m:n network topology over a network 235.

Each of the master devices 231 to 233 transmits image data to the client devices 241 to 245. Each of the client devices 241 to 245 may selectively display a screen corresponding to certain image data among a plurality of pieces of image data respectively received from the master devices 231 to 233. Also, each of the client devices 241 to 245 may aggregate a plurality of images included in the received plurality of pieces of image data to generate one screen, and display the generated screen.

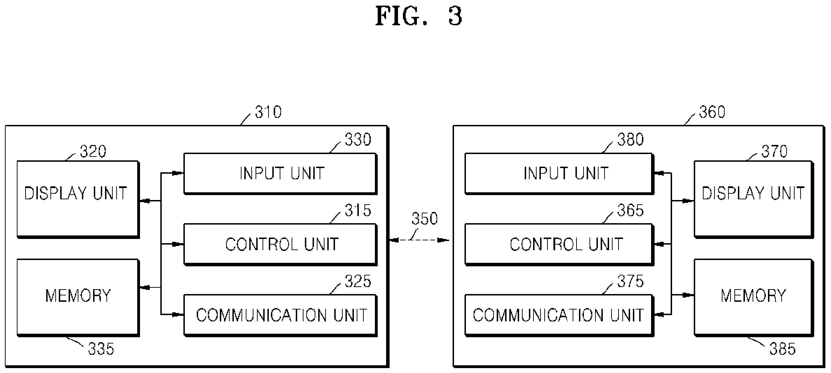

FIG. 3 is a diagram illustrating a display device according to an embodiment of the present disclosure. The display device according to an embodiment of the present disclosure is an electronic device that uses the mirroring service over the above-described network, and may be a master device 310 or a client device 360.

Referring to FIG. 3, the display device according to an embodiment of the present disclosure may be one of the master device 310 and the client device 360. Also, as described above, the master device 310 and the client device 360 according to an embodiment or another embodiment of the present disclosure may be connected to each other in the 1:1 network topology, the 1:n network topology, the n:1 network topology, or the m:n network topology.

A case in which the master device 310 and the client device 360 are connected to each other in the 1:1 network topology will be described as an example. The master device 310 and the client device 360 are relative concepts between display devices performing the mirroring service, a device transmitting a screen is referred to as the master device 310, and a device that receives the screen to display a mirroring screen is referred to as the client device 360.

The master device 310 includes a control unit 315, a display unit 320, and a communication unit 325. Also, the master device 310 may further include an input unit 330 and a memory 335.

The control unit 315 generates image data. In detail, the control unit 315 may generate a screen corresponding to the image data such as still-image data or moving-image data. Alternatively, a menu screen may use a user interface screen.

The display unit 320 may display the screen corresponding to the image data. In detail, the display unit 320 may receive the screen generated by the control unit 315, and output the received screen through a display panel (not shown).

The memory 335 may store various pieces of data, programs used to operate the master device 310, and transmit and/or receive data.

The control unit 315 may execute the mirroring service. When the mirroring service is executed, the control unit 315 may transmit image data, corresponding to a displayed screen, to the client device 360.

In detail, the memory 335 may include a frame buffer (not shown), which stores pixel data. The control unit 315 may encode image data corresponding to a mirroring screen by using the pixel data stored in the frame buffer, and perform control in order for the encoded image data to be transmitted to the client device 360.

The communication unit 325 transmits the image data generated by the control unit 315 to the client device 360. In detail, the communication unit 325 may include a communication module for wired or wireless access to the network 350. For example, the communication unit 325 may include communication module such as a Wi-Fi module, a Wibro module, a World interoperability for microwave access (Wimax) module, a CDMA module, a WCDMA module, and a NFC module.

That is, the image data for executing the mirroring service is generated by the control unit 315, and is transmitted to the client device 360 through the communication unit 325.

Hereinafter, when at least one portion of a certain screen displayed by the display unit 320 of the master device 310 is mirrored and displayed by the client device 360, a region of the certain screen which is mirrored by the client device 360 is referred to as a first region, and a region of the certain screen which is not mirrored by the client device 360 is referred to as a second region.

The control unit 315 generates, as high image-quality data, the first region (mirrored by the client device 360) of the certain screen displayed by the display unit 320, and generates, as low image-quality data, the second region which is not mirrored by the client device 360.

The communication unit 325 transmits the high image-quality data and the low image-quality data, which are generated by the control unit 315, to the client device 360. Here, the low image-quality data may be low image-quality moving or still image data and thumbnail data.

In detail, the communication unit 325 transmits the high image-quality data and the low image-quality data to a communication unit 375 of the client device 360 over the network 350.

That is, when the client device 360 mirrors and displays a certain region of the certain screen displayed by the display unit 320, the control unit 315 may generate, as high image-quality data, image data corresponding to the certain region actually displayed by the client device 360, and generate, as low image-quality data, image data corresponding to a region which is not actually displayed by the client device 360.

The low image-quality data and the high image-quality data may be determined depending on the product specification of the display device. In detail, the data specification of each of the low image-quality data and the high image-quality data may be determined based on at least one of a resolution, a bit rate, a frame rate, and an encoding specification of an image, generated by the master device 310 (which is the display device), and a condition and a bandwidth of the network 350.

The detailed specification of each of the low image-quality data and the high image-quality data may be experimentally optimized and set to a value within a certain range, based on at least one of the product specification of the display device and a bandwidth of the communication network.

For example, the detailed specification of the high image-quality data may be determined based on the bandwidth of the network 350. In detail, when the master device 310 and the network 350 are connected to each other in the 1:1 network topology, at least one of a bit rate and a frame rate is determined based on the current bandwidth of the network 350 connected between the master device 310 and the client device 360.

As another example, as illustrated in FIG. 1B, when the master device 310 and the network 350 are connected to each other in the 1:1 network topology, at least one of a bit rate and a frame rate of one master device may be determined based on the lowest of bandwidths of a plurality of networks respectively connected between the one master device and a plurality of client devices.

For example, it is assumed that the detailed specification of the high image-quality data is determined as a resolution of 1920*1280, a bit rate of a maximum of 15 Mbps and a minimum of 5 Mbps, and a frame rate of a maximum of 30 fps and a minimum of 15 fps. In performing a mirroring operation, when a communication link quality of a network is degraded, a bit rate value may be reduced by first changing a bit rate, and when the bit rate reaches a minimum value, a frame rate may be reduced. That is, at least one of the bit rate and the frame rate is adjusted according to a bandwidth based on the communication link quality of the network.

Moreover, as determined the detailed specification of the high image-quality data, the detailed specification of the low image-quality data may be determined. Also, unlike the detailed specification of the high image-quality data, the low image-quality data may be generated by reducing at least one of a resolution, a bit rate, and a frame rate of image data.

In detail, a resolution value of the high image-quality data may be increased, and a resolution value of the low image-quality data may be reduced, according to a resolution value generated by the control unit 315. Also, the high image-quality data may be generated to have an increased frame rate, and the low image-quality data may be generated to have a decreased frame rate, according to a frame rate applicable to image data generated by the control unit 315.

Moreover, in generating the low image-quality data, the bit rate of the high image-quality data may be first reduced, and when it is required to additionally degrade a quality of an image, the frame rate may be reduced.

Moreover, the control unit 315 may acquire mirroring screen information. Here, the mirroring screen information is information about a screen actually displayed by the client device 360. The mirroring screen information may be transmitted from the client device 360, and received by the master device 310. Alternatively, the control unit 315 may autonomously monitor and acquire a screen displayed by the display unit 370 of the client 360.

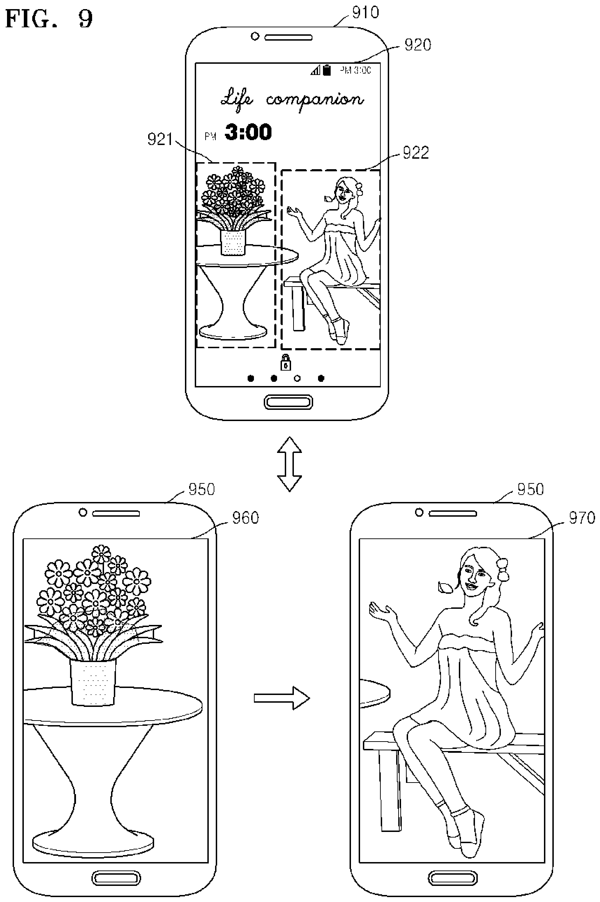

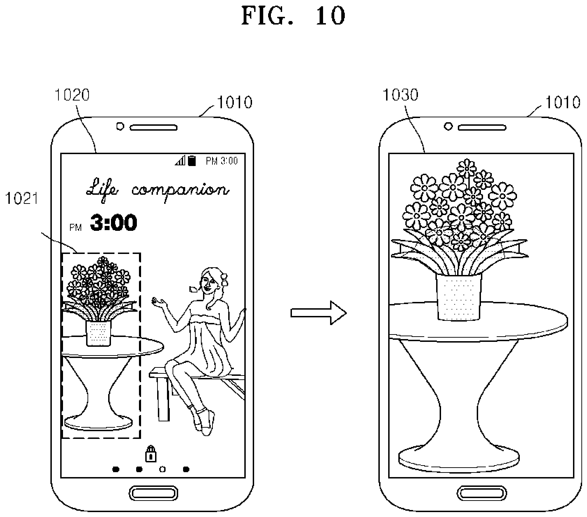

In detail, the master device 310 may monitor the mirroring screen information at certain time intervals to autonomously acquire the mirroring screen information. Alternatively, when changing of a mirroring screen actually displayed by the client device 360 is requested, the master device 310 may acquire the mirroring screen information. Hereinafter, the mirroring screen information will be described in detail with reference to FIGS. 9 and 10.

For example, when the client device 360 mirrors a screen displayed by the master device 310, the client device 360 may display a partial region of the screen displayed by the master device 310. In this case, the client device 360 may transmit information about the displayed partial region to the master device 310. In this case, the mirroring screen information may include information indicating a position of the partial region, mirrored by the client device 360, of the screen displayed by the master device 310.

Moreover, the control unit 315 may generate the low image-quality data and the high image-quality data, based on the mirroring screen information.

In detail, the control unit 315 may generate the high image-quality data by using pixel data corresponding to the first region stored in the frame buffer, based on the mirroring screen information. In detail, the control unit 315 may encode the pixel data corresponding to the first region stored in the frame buffer to generate the high image-quality data.

Moreover, the control unit 315 may generate the low image-quality data by using pixel data corresponding to the second region stored in the frame buffer, based on the mirroring screen information. In detail, the control unit 315 may encode the pixel data corresponding to the second region stored in the frame buffer to generate the low image-quality data.

Moreover, the control unit 315 may encode and multiplex the low image-quality data and the high image-quality data to generate a Transport Stream (TS) corresponding thereto. Therefore, the communication unit 325 may transmit the transport stream generated by the control unit 315 to the communication unit 375 of the client device 360.

In detail, the control unit 315 may divide one screen into a plurality of regions, and in encoding and multiplexing a plurality of pieces of data respectively corresponding to the plurality of regions, the control unit 315 may differently change at least one of a bit rate, a frame rate, and a resolution of an image in the plurality of regions, and encode the plurality of regions. The control unit 315 may multiplex data of the encoded plurality of regions to generate one transport stream. For example, the transport stream may be generated according to MPEG-2 TS standard.

It is assumed that the client device 360 mirrors and outputs the first region of the screen displayed by the master device 310, and the control unit 315 divides one screen into a plurality of regions to transmit the regions. In this case, the control unit 315 may respectively set a bit rate and a frame rate of image data, corresponding to the mirrored first region, to 15 Mbps and 30 fps, and encode an image. Also, the control unit 315 may respectively set a bit rate and a frame rate of image data, corresponding to the unmirrored second region, to 1 Mbps and 10 fps, and encode an image. In addition, the control unit 315 may multiplex the encoded images to generate one transport stream.

The input unit 330 receives a request or a command for controlling an operation of the master device 310 from a user, or receives the other data.

The input unit 330 may be configured with a touch screen. In detail, the input unit 330 may include a touch pad (not shown) coupled to a display panel (not shown) included in the display unit 320. The input unit 330 may output the touch screen to the display panel, and the display unit 320 displays the touch screen. And when a command is input through the touch screen, the touch pad may sense the command.

For example, when the input unit 330 is configured with the touch screen, the input unit 330 may output a menu screen (which is a user interface screen) to the display panel coupled to the touch pad. When the user touches a certain point of the menu screen, for example, touches a point at which a mirroring service menu is displayed, the input unit 330 senses the touched point. In addition, the input unit 330 may transport sensed information to the control unit 315.

Then, the control unit 315 may recognize a request or a command of the user corresponding to a menu displayed at the sensed point, and may execute the recognized request or command. In the example, when the point with the mirroring service menu displayed thereat is touched, the input unit 330 may transmit information, which requests for execution of the mirroring service, to the control unit 315. Alternatively, when the input unit 330 transmits position information of the touched point to the control unit 315, the control unit 315 may recognize a menu, corresponding to the position information, as the mirroring service menu, and control the master device 310 so as to execute the mirroring service.

Moreover, the input unit 330 may receive selection of the first region, which is to be mirrored by the client device 360, of the screen displayed by the display unit 320. The control unit 315 may encode image data of the first region selected through the input unit 330 to generate the high image-quality data, and perform control in order for the generated high image-quality data to be transmitted to the client device 360.

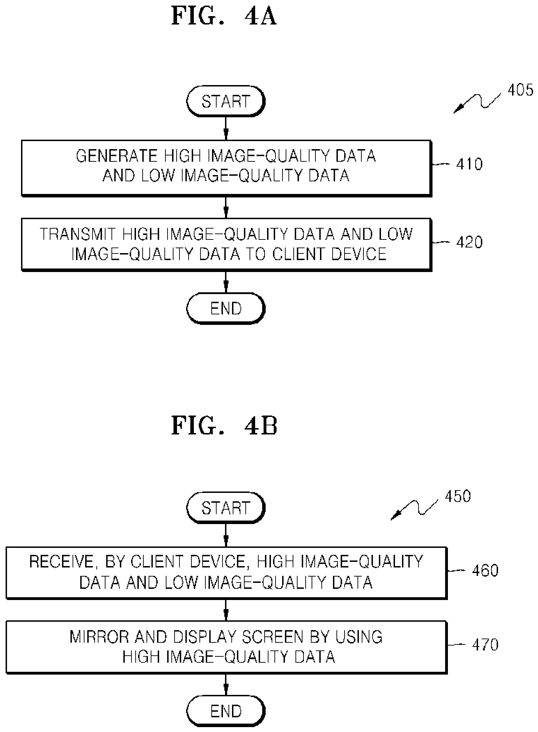

Hereinafter, a detailed operation of the master device 310 will be described in detail with reference to FIGS. 4A to 10.

The client device 360 is at least one display device which is connected to the client device over the network 350, and mirrors and outputs at least one screen or a certain region which is displayed by the master device 310.

The client device 360 includes a control unit 365, a display unit 370, and a communication unit 375 which correspond to the detailed configuration of the master device 310. Also, the client device 360 may further include an input unit 380 and a memory 385.

The control unit 365, the display unit 370, the communication unit 375, the input unit 380, and the memory 385 respectively correspond to the control unit 315, the display unit 320, the communication unit 325, the input unit 330, and the memory 335, and thus, the same descriptions are not repeated in describing the master device 310.

The communication unit 375 receives image data from the master device 310, for screen mirroring. In detail, the communication unit 375 is wiredly and/or wirelessly connected to the communication unit 325 of the master device 310 over the network 350, and receives image data transmitted from the communication unit 325.

The communication unit 375 receives the first region, mirrored by the client device 360, as the high image-quality data, and receives the second region, which is not mirrored by the client device 360, as the low image-quality data.

The control unit 365 generates a screen corresponding to the first region. In detail, the control unit 365 may de-multiplex and decode the received high image-quality data to generate the screen corresponding to the first region, for mirroring image data displayed by the master device 310.

For example, the control unit 365 may wholly mirror the screen displayed by the master device 310, and may mirror a certain portion of the screen displayed by the master device 310. Also, when a plurality of pieces of image data respectively corresponding to a plurality of screens are received, the control unit 365 may aggregate at least one or some of the plurality of pieces of image data to generate one screen.

The display unit 370 mirrors and displays the screen generated by the control unit 365.

In detail, the communication unit 375 may receive a transport stream generated by multiplexing the low image-quality data and the high image-quality data. The control unit 365 may de-multiplex the transport stream. In addition, the control unit may decode the de-multiplexed high image-quality data to generate a mirroring screen.

The input unit 380 receives a request or a command for controlling an operation of the client device 360 from a user, or receives the other data.

The input unit 380 receives selection of a mirrored screen. In detail, the input unit 380 may receive a command that allows at least one region or a certain region of at least one screen, displayed by at least one master device, to be selected and mirrored. In detail, the input unit 380 may display a menu including a list of screens included in the received image data, and receive selection of a certain screen which is to be mirrored through the displayed menu.

Moreover, the input unit 380 may receive a request for changing of the mirroring screen. In detail, the input unit 380 may display the menu including the list of the screens included in the received image data, and change the certain screen which is to be mirrored through the displayed menu.

For example, the input unit 380 may receive a request for mirroring a screen of which a view has been moved from the first region to another region of the certain screen displayed by the master device.

Moreover, the control unit 365 may generate mirroring screen information that is information about a screen actually displayed by the display unit 370. Therefore, the communication unit 375 may transmit the mirroring screen information to the master device 310. When the communication unit 375 transmits the mirroring screen information to the communication unit 325 of the master device 310, the control unit 315 may receive the mirroring screen information, and generate the low image-quality data and the high image-quality data, based on the mirroring screen information.

Hereinafter, a detailed operation of the client device 360 will be described in detail with reference to FIGS. 4A to 10.

FIGS. 4A and 4B are flowcharts illustrating a screen mirroring method. A screen mirroring method 405 illustrated in FIG. 4A has the master device 310 according to the present disclosure described above with reference to FIGS. 1A to 3. Also, a screen mirroring method 450 according to another example of the present disclosure illustrated in FIG. 4B has the client device 360 according to the present disclosure described above with reference to FIGS. 1A to 3. Thus, the same descriptions provided with regard to FIGS. 1A to 3 are not repeated.

Referring to FIG. 4A, the screen mirroring method 405 generates, as high image-quality data, a first region mirrored by the client device 360 in a certain screen displayed by the master device 310, and generates, as low image-quality data, a second region which is not mirrored by the client device 360 in the certain screen, in operation 410. Operation 410 may be performed by the control unit 315.

The low image-quality data and the high image-quality data, which are generated in operation 410, are transmitted to the client device 360 in operation 420. Operation 420 may be performed by the communication unit 325.

Referring to FIG. 4B, in operation 460, the screen mirroring method 450 receives the first region, mirrored by the client device 360, as the high image-quality data, and receives the second region, which is not mirrored by the client device 360, as the low image-quality data. Operation 460 may be performed by the communication unit 375 of the client device 360.

In operation 470, the screen mirroring method 405 mirrors and displays a screen corresponding to the first region by using the high image-quality data which is received in operation 460. Operation 470 may be performed in the display unit 370 according to control by the control unit 365.

In the present disclosure, image data corresponding to a screen actually displayed by the client device 360 is the high image-quality data, and the low image-quality data is not the image data corresponding to a screen actually displayed by the client device 360. Therefore, in comparison with a case in which all image data are received as the high image-quality data, a transmission efficiency of data increases without a quality of an image being degraded, and a data transmission time is shortened, in providing a mirroring screen.

Moreover, the low image-quality data is received, and thus, when changing of the mirroring screen is requested, the mirroring screen is quickly changed by using the low image-quality data, and is displayed to a user. Furthermore, image data corresponding to the changed mirroring screen is subsequently received as the high image-quality data, and thus, a good image-quality mirroring screen is subsequently displayed to the user.

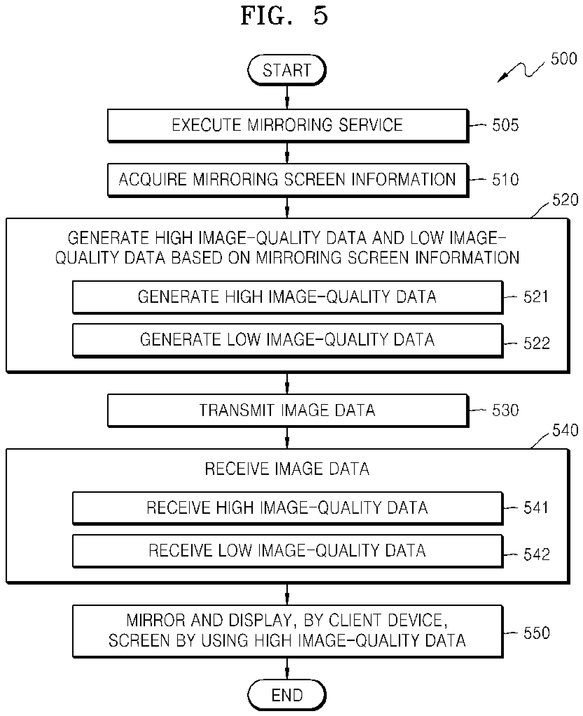

FIG. 5 is a flowchart illustrating a screen mirroring method 450.

Referring to FIG. 5, the screen mirroring method 450 according to the present disclosure includes operations 520, 530, 540 and 550, which respectively correspond to operations 410, 420, 460 and 470 of FIG. 4. Thus, the same descriptions provided with regard to FIG. 4 are not repeated.

Operations 505, 510, 520 and 530 may be performed by the master device 310 described above with reference to FIG. 3, and operations 540 and 550 may be performed by the client device 360. Thus, the same descriptions provided with regard to FIG. 3 are not repeated.

The screen mirroring method 500 executes the mirroring service, in operation 505. The mirroring service may be requested through the input unit 330 of the master device 310 or the input unit 380 of the client device 360, and thus, the display unit 370 of the client device 360 may mirror and display a screen displayed by the display unit 320 of the master device 310 according to the mirroring service request.

The screen mirroring method 500 acquires mirroring screen information that is information about a screen actually displayed by the client device 260.

For example, when a master device and a client device are connected to each other in the n:1 network topology, the client device may receive image data including n number of screens respectively displayed by n number of master devices. When the client device mirrors and displays an nth screen of the received n screens, the client device may generate mirroring screen information indicating that the nth screen is being mirrored, and transmit the generated mirroring screen information to all the n masters. Alternatively, the client device may transmit the generated mirroring screen information to only an nth master device displaying the nth screen. In this case, a master device receiving the mirroring screen information may transmit the high image-quality data for screen mirroring, and a master device which does not receive the mirroring screen information may transmit the low image-quality data.

Operation 510 may be performed by the control unit 315 of the master device 310. In detail, the mirroring screen information may be generated by the control unit 365 of the client device 360, and transmitted to the control unit 315 of the master device 310. For example, when changing of a screen displayed by the display unit 370 is requested, the control unit 365 may generate and transmit the mirroring screen information. Alternatively, the control unit 365 may update and transmit information about a mirrored screen at certain time intervals.

In operation 520, the screen mirroring method 500 generates low image-quality data and high image-quality data, based on the mirroring screen information which is acquired in operation 510. Operation 520 may be performed by the control unit 315.

In detail, the screen mirroring method 500 encodes pixel data corresponding to the first region to generate the high image-quality data, in operation 521. The screen mirroring method 500 encodes pixel data corresponding to the second region to generate the low image-quality data, in operation 522.

The screen mirroring method 500 may multiplex the encoded low image-quality data and high image-quality data to generate a transport stream.

The image data generated in operation 520 is transmitted to the client device 360, in operation 530. In detail, the transport stream generated in operation 520 may be transmitted over the network 350. Operation 530 may be performed by the communication unit 325.

In operation 540, the screen mirroring method 500 receives the image data which is transmitted in operation 530. Operation 540 may be performed by the communication unit 375.

In detail, the screen mirroring method 500 receives the first region, mirrored by the client device 360, as the high image-quality data in operation 541. The screen mirroring method 500 receives the second region, which is not mirrored by the client device 360, as the low image-quality data in operation 542.

In detail, the transport stream received in operation 540 may be de-multiplexed and decoded (operation not shown). In detail, the transport stream received in operation 540 may be de-multiplexed as the low image-quality data and the high image-quality data, and the de-multiplexed high image-quality data may be decoded. Also, the de-multiplexed low image-quality data may be decoded when it is required to change and display the low image-quality data in a mirroring screen.

In operation 550, the screen mirroring method 500 mirrors and displays a screen by using the high image-quality data which is received in operation 540. Operation 550 may be performed in the display unit 370 according to control by the control unit 365.

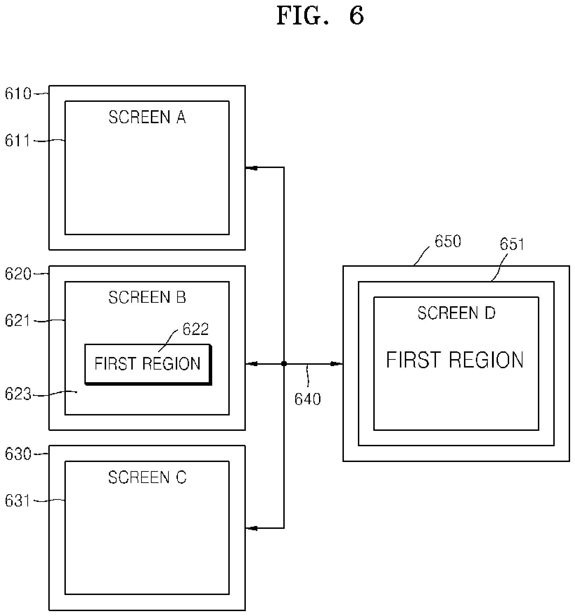

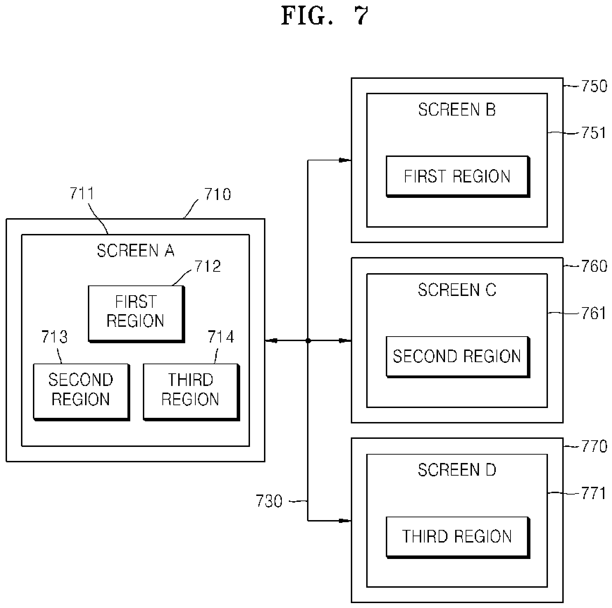

Operations 510, 520, 530, 540 and 550 will now be described in detail with reference to FIGS. 6 and 7.

FIG. 6 is a diagram for describing a detailed operation of the screen mirroring method.

The following description will be made on, for example, a case in which a plurality of display devices performing the screen mirroring method 500 are connected to each other in the n:1 network topology as described in FIG. 2A and FIG. 6.

Referring to FIG. 6, a first master device 610, a second master 620, and a third master device 630 respectively display a screen A 611, a screen B 621, and a screen C 631. The plurality of master devices 610, 620 and 630 and one client device 650 are connected to each other over a network 640.

Each of the master devices 610, 620 and 630 illustrated in FIG. 6 corresponds to the master device 310 of FIG. 3, and the client device 650 of FIG. 6 corresponds to the client device 360 of FIG. 3. Therefore, a detailed operation of a screen mirroring method will be described with reference to FIGS. 3 and 6.

In operation 540, the one client device 650 may receive image data from the plurality of master devices 610, 620 and 630.

When the control unit 315 is requested to selectively mirror a first region 622 included in the screen B 621, the control unit 315 acquires mirroring screen information including position information of the selected first region 622. For example, the mirroring screen information may include information which includes coordinates of the first region 622 and enables a position of the first region 622 to be determined in the screen B 621. Also, a screen to be mirrored may be selected through the input unit 330 of the master device 310 or the input unit 380 of the client device 360.

The control unit 315 may generate the first region 622 as the high image-quality data, and generate, as the low image-quality data, a region 623 other than the first region 622 in the screen B 621, based on the mirroring screen information. Also, the screen A 611 and the screen C 631 which are not actually displayed by the client device 650 are generated as the low image-quality data, and transmitted to the client device 650.

In detail, image data corresponding to the first region 622 is encoded into the high image-quality data, and the region 623 other than the first region 622 is encoded into the low image-quality data. Also, the screen A 611 and the screen C 631 are encoded into the low image-quality data. The control unit 315 may multiplex the encoded data by region to generate one transport stream. That is, a transport stream generated and transmitted by the second master device 620 includes image data, corresponding to the first region 622 that is the high image-quality data, and image data corresponding to the region 623 that is the low image-quality data. Furthermore, a transport stream generated and transmitted by the first master device 610 includes image data corresponding to the screen A 611 that is the low image-quality data. Also, a transport stream generated and transmitted by the third master device 630 includes image data corresponding to the screen C 631 that is the low image-quality data.

The client device 650 receives the respective transport streams from the first to third master devices 610, 620 and 630 over the network 640. In detail, the communication unit 375 receives each of the transport streams, and the control unit 365 de-multiplexes and decodes each of the received transport streams to generate a screen corresponding to the first region 622.

Then, the display unit 370 displays the screen corresponding to the first region 622. A screen D 651 that is a display screen of the client device 650 is the same as the screen corresponding to the first region 622.

FIG. 7 is a diagram for describing a detailed operation of the screen mirroring method according to an example.

The following description will be made on, for example, a case in which a plurality of display devices performing the screen mirroring method 500 are connected to each other in the 1:n network topology as described in FIG. 1B and FIG. 7.

Referring to FIG. 7, a master device 710 displays a screen A 711. Here, the screen A 711 includes a first region screen, a second region screen, and a third region screen. A first client device 750, a second client device 760, and a third client device 770 respectively display a screen B 751, a screen C 761, and a screen D 771. The plurality of client devices 750, 760 and 770 and one master device 710 are connected to each other over a network 730.

The master device 710 of FIG. 7 corresponds to the master device 310 of FIG. 3, and each of the client devices 750, 760 and 770 illustrated in FIG. 7 corresponds to the client device 360 of FIG. 3. Therefore, a detailed operation of a screen mirroring method will be described with reference to FIGS. 3 and 7.

In operation 540, each of the client devices 750, 760 and 770 may receive image data from the one master device 710.

First, a screen mirroring operation of the first client device 750 will be described.

For example, in the screen mirroring operation of the first client device 750, the control unit 315 is requested to selectively mirror a first region 712 included in the screen A 711 through the input unit 380 of the first client device 750 or the input unit 330 of the master device 710. The control unit 315 acquires mirroring screen information including position information of the selected first region 712. For example, the mirroring screen information may include information which includes coordinates of the first region 712 and enables a position of the first region 712 to be determined in the screen A 711.

Subsequently, the control unit 315 may generate image data, corresponding to the first region 712, as the high image-quality data, and generate image data, corresponding to a region other than the first region 712 in the screen A 711, as the low image-quality data, based on the mirroring screen information. In detail, the image data corresponding to the first region 712 is encoded into the high image-quality data, and the image data corresponding to the region other than the first region 712 is encoded into the low image-quality data. Also, the control unit 315 may multiplex the encoded data by region to generate one transport stream.

The first client device 750 receives a transport stream over the network 730. In detail, the communication unit 375 receives the transport stream, and the control unit 365 de-multiplexes the received transport steam to separate the low image-quality data and the high image-quality data, and decodes the high image-quality data to generate a screen corresponding to the first region 712.

Then, the display unit 370 displays the screen corresponding to the first region 712. The screen B 751 that is a display screen of the first client device 750 is the same as the screen corresponding to the first region 712.

Next, a screen mirroring operation of the second client device 760 will be described.

In the screen mirroring operation of the second client device 760, when the control unit 315 is requested to selectively mirror a second region 713 included in the screen A 711 through the input unit 380 of the second client device 760 or the input unit 330 of the master device 710, the control unit 315 acquires mirroring screen information as position information of the selected second region 713. For example, the mirroring screen information may include information which includes coordinates of the second region 713 and enables a position of the second region 713 to be determined in the screen A 711.

Subsequently, the control unit 315 may generate the second region 713 as the high image-quality data, and generate image data, and generate, as the low image-quality data, a region other than the second region 713 in the screen A 711, based on the mirroring screen information. In detail, image data corresponding to the second region 713 is encoded into the high image-quality data, and image data corresponding to the region other than the second region 713 is encoded into the low image-quality data. Also, the control unit 315 may multiplex the encoded data by region to generate one transport stream.

The second client device 760 receives a transport stream over the network 730. In detail, the communication unit 375 receives the transport stream, and the control unit 365 de-multiplexes the received transport steam to separate the low image-quality data and the high image-quality data, and decodes the high image-quality data to generate a screen corresponding to the second region 713.

Then, the display unit 370 displays the screen corresponding to the second region 713. The screen C 761 that is a display screen of the second client device 760 is the same as the screen corresponding to the second region 713.

Next, a screen mirroring operation of the third client device 770 will be described.

In the screen mirroring operation of the third client device 770, when the control unit 315 is requested to selectively mirror a third region 714 included in the screen A 711 through the input unit 380 of the third client device 770 or the input unit 330 of the master device 710, the control unit 315 acquires mirroring screen information as position information of the selected third region 714. For example, the mirroring screen information may include information which includes coordinates of the third region 714 and enables a position of the third region 714 to be determined in the screen A 711.

Subsequently, the control unit 315 may generate the third region 714 as the high image-quality data, and generate image data, and generate, as the low image-quality data, a region other than the third region 714 in the screen A 711, based on the mirroring screen information. In detail, image data corresponding to the third region 714 is encoded into the high image-quality data, and image data corresponding to the region other than the third region 714 is encoded into the low image-quality data. Also, the control unit 315 may multiplex the encoded data by region to generate one transport stream.

The third client device 770 receives a transport stream over the network 730. In detail, the communication unit 375 receives the transport stream, and the control unit 365 de-multiplexes the received transport steam to separate the low image-quality data and the high image-quality data, and decodes the high image-quality data to generate a screen corresponding to the third region 714.

Then, the display unit 370 displays the screen corresponding to the third region 714. The screen D 771 that is a display screen of the third client device 770 is the same as the screen corresponding to the third region 714.

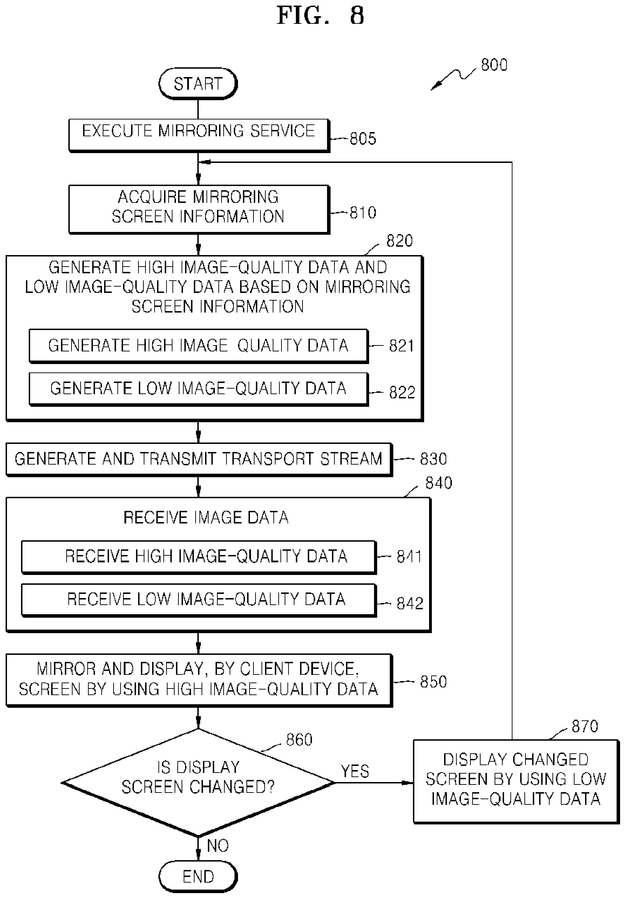

FIG. 8 is a flowchart illustrating a screen mirroring method 800 according to another embodiment of the present disclosure. Operations 805, 810, 820, 830, 840 and 850 of the screen mirroring method 800 respectively correspond to operations 505, 510, 520, 530, 540 and 550 of FIG. 5, and thus, the same descriptions provided with regard to FIG. 5 are not repeated. Also, each operation of the screen mirroring method 800 may be performed by at least one of the master device and the client device that are the display devices described above with reference to FIGS. 1A to 3. Hereinafter, the screen mirroring method 800 will be described in detail with reference to FIGS. 3 and 8.

Referring to FIG. 8, the screen mirroring method 800 further includes operation 860 that, after operation 850, may detect a change to a display screen.

In detail, operation 860 of changing a screen changes a screen, actually displayed by the client device 360, from a first region to another screen. Operation 860 may include: an operation that requests for changing of a screen; an operation that displays a menu including a list of screens included in image data which is received in operation 840; an operation that selects at least one screen from the list; and an operation that changes a screen, corresponding to the first region displayed by the client device 360, to the selected screen. In operation 860, when a display screen is not changed, the procedure ends.

In operation 860, a screen change request may be input through the input unit 330 of the master device 310 or the input unit 380 of the client device 360. In detail, a user may request for changing of a currently mirrored screen by using a screen change request menu displayed by the touch screen. Also, the control unit 315 of the master device 310 or the control unit 365 of the client device 360 may display a current screen, and after a certain time elapses, may automatically change the displayed screen.

In operation 870, when changing of a display screen is requested, the client device 360 displays a screen corresponding to changing of a screen by using the low image-quality data which is received in operation 841.

Moreover, when changing of a screen is requested, the master device 310 may generate, as the high image-quality data, image data corresponding to a screen of a changed client device, and transmit the high image-quality data to the client device 360. That is, after the screen is changed, the client device 360 receives image data, corresponding to the changed screen, as the high image-quality data.

Subsequently, the client device 360 may display a screen corresponding to the changed screen by using the high image-quality data which is received.

That is, after operation 870 is performed, the screen mirroring method 800 may return to operation 810, and perform operations 810, 820, 830, 840 and 850.

Hereinafter, operations 860 and 870 of changing and displaying a screen will be described with reference to FIG. 9.

FIG. 9 is a diagram for describing a detailed operation of the screen mirroring method according to another embodiment of the present disclosure.

Referring to FIG. 9, a case in which a master device and a client device are connected to each other in the 1:1 network topology is illustrated.

In mirroring a screen 920 of a master device 910, with respect to a current time, a client device 950 mirrors a screen of a region 921, and changes a view of the screen to mirror a screen of a region 922. That is, before changing of a screen is requested, the client device 950 mirrors the screen of the region 921 to display a screen 960. Subsequently, when changing of a screen is requested, the client device 950 mirrors the screen of the region 922, for which changing has been requested, to display a screen 970.

In an example illustrated in FIG. 9, when the client device 950 is requested to change a screen (mirrored by the client device 950) from the screen of the region 921 to the screen of the region 922, the client device 950 quickly changes and displays the screen 970 corresponding to the region 922 by using the low image-quality data which is already received.

In detail, before changing of a screen is requested, the client device 950 receives image data of the region 921 as the high image-quality data, and receives, as the low image-quality data, image data of a region other than the region 921 in the screen 920. When changing of a screen is requested, the client device 950 quickly changes and displays the screen of the region 922 by using the low image-quality data which is already received, in operation 870. Subsequently, operations 810 to 850 are repeated, and will be described below in detail.

Mirroring screen information, which is information about a screen that is changed when changing of a screen is requested, may be updated in operation 810.

In operation 821, the screen mirroring method 800 generates, as the high image-quality data, image data corresponding to the region 922 that is a newly mirrored region, based on the mirroring screen information. In operation 822, the master device 910 generates, as the low image-quality data, image data corresponding to a region other than the region 922 in the displayed screen 920.

In operation 830, the master device 910 changes the image data (generated in operations 821 and 822) to generate a transport stream, and transmits the transport stream to the client device 950.

In operation 840, the client device 950 receives the transport stream which is transmitted in operation 830.

In detail, the client device 950 receives the high image-quality data corresponding to the region 922 that is the displayed screen, in operation 841.

In operation 842, the client device 950 receives the low image-quality data corresponding to the region other than the region 922 in the screen 920 that is not displayed.

Therefore, the client device 950 image-processes the received image data to mirror and display a high image-quality screen 970, in operation 850.

As described above, when changing of a screen is requested, the screen mirroring method 800 quickly changes the screen by using the low image-quality data which is already received, thus minimizing a time taken when changing the screen. Therefore, boredom that a user feels when changing the screen is reduced. Also, by receiving the high image-quality data corresponding to a changed screen, a high image-quality screen is continuously displayed.

FIG. 10 is another diagram for describing a detailed operation of the screen mirroring method according to another embodiment of the present disclosure. As another example of changing a screen, a case of enlarging or reducing a mirroring screen may be provided.

Referring to FIG. 10, a case in which a client device 1010 displays the same screen 1020 as a screen displayed by the master device 310 and is requested to enlarge a screen is illustrated. Enlarging of a mirroring screen is requested in operation 860.

In response to the screen enlargement request, the mirrored screen 1020 is enlarged, and thus, a screen 1030 is displayed in operation 870. When there is the screen enlargement request, the screen 1020 is a screen that is displayed by using data already received as the high image-quality data, and thus, the screen 1030 is a screen that is generated from the high image-quality data.

By enlarging a screen, mirroring screen information that is information about the changed screen 1030 may be updated in operation 810. In detail, information about which position of the mirroring screen 1020 the changed screen 1030 is arranged at may be updated to the mirroring screen information.

In enlarging a screen, the screen mirroring method 800 may generate whole image data as the low image-quality data without generating the high image-quality data, in operation 820. In enlarging the screen, since a view may move in the whole image data, the screen mirroring method 800 generates whole image data as the low image-quality data, and thus, when the view moves subsequently, the screen mirroring method 800 may quickly move the view in the whole image data and display a screen.

In operation 830, the master device 310 changes the image data (generated in operations 820) to generate a transport stream, and transmits the transport stream to the client device 1010.

In operation 840, the client device 1010 receives the transport stream which is transmitted in operation 830. In detail, the client device 1010 may receive the whole image data as the low image-quality data.

As described above, the screen mirroring method 800 receives, as the high image-quality data, only image data corresponding to a screen actually displayed by the client device 1010 and receives the other image data as the low image-quality data, and thus, when changing of a screen is subsequently requested, the screen mirroring method 800 quickly changes the screen by using the low image-quality data to display the changed screen. Accordingly, boredom that a user feels when changing the screen is reduced.

As described above, according to the one or more of the above various embodiments of the present disclosure, the master device, the client device, and the screen mirroring method thereof quickly change a mirroring screen when changing of the mirroring screen is requested, thus reducing boredom that a user feels when changing the mirroring screen.

The screen mirroring method according to an embodiment or another embodiment of the present disclosure may also be embodied as computer readable codes on a computer readable recording medium. The computer readable recording medium is any data storage device that may store data which may be thereafter read by a computer system. Examples of the computer readable recording medium include Read-Only Memory (ROM), Random-Access Memory (RAM), CD-ROMs, magnetic tapes, floppy disks, and optical data storage devices. The computer readable recording medium may also be distributed over network coupled computer systems so that the computer readable code may be stored and executed in a distributed fashion.

It should be understood that the various embodiments described therein should be considered in a descriptive sense only and not for purposes of limitation. Descriptions of features or aspects within each embodiment should typically be considered as available for other similar features or aspects in other various embodiments.

While the present disclosure has been shown and described with reference to various embodiments thereof, it will be understood by those skilled in the art that various changes in form and details may be made therein without departing from the scope of the present disclosure as defined by the appended claims.

## Claims

1. A master device (110) comprising:
a display unit (320);
a memory (335) comprising a frame buffer configured to store pixel data;
a control unit (315) configured to control the display unit (32) to display a screen; and
a communication unit (325) configured to:
communicate with a client device (120); and
transmit (505), to the client device (120) as part of a mirroring service, data corresponding to the entire displayed screen;
wherein the control unit (315) is further configured to:
receive (510), from the client device (120) after completion of the mirroring service, mirroring screen information comprising information indicating a position of a first region of the entire displayed screen;
generate (521) high image-quality data of the first region using stored pixel data corresponding to the first region, based on the information indicating the position of the first region; and
determine a second region of the entire displayed screen based on the information indicating the position of the first region, and generate (522) low image-quality data of the second region using stored pixel data corresponding to the second region, wherein the second region corresponds to the entire displayed screen excluding the first region; and
wherein the communication unit (325) is further configured to transmit the high image-quality data and the low image-quality data to the client device (120); and
wherein the stored pixel data includes the stored pixel data corresponding to the first region and the stored pixel data corresponding to the second region.

2. The master device (110) of claim 1, wherein,
the control unit (315) is configured to encode and multiplex the high image-quality data and the low image-quality data to generate a transport stream, and
the communication unit (325) is configured to transmit the transport stream to the client device (120).

3. The master device (310) of claim 1, wherein the control unit (315) is further configured to adjust at least one of a resolution, a bit rate, and a frame rate to generate the high image-quality data and the low image-quality data.

4. A screen mirroring method of a master device (110) according to any one of claims 1 to 3, the method comprising:
displaying, on the display unit (320), a screen;
communicating, by the communications unit (325), with a client device (120);
transmitting (505), to the client device (120) as part of a mirroring service, data corresponding to the entire displayed screen;
receiving (510), from the client device (120) after completion of the mirroring service, mirroring screen information comprising information indicating a position of a first region of the entire displayed screen;
generating (521) high image-quality data of the first region using stored pixel data corresponding to the first region, based on the information indicating the position of the first region;
determining a second region of the entire displayed screen based on the information indicating the position of the first region, and generating (522) low image-quality data of the second region using stored pixel data corresponding to the second region, wherein the second region corresponds to the entire displayed screen excluding the first region; and
transmitting, by the communication unit (525), the high image-quality data and the low image-quality data to the client device (120);
wherein the stored pixel data includes the stored pixel data corresponding to the first region and the stored pixel data corresponding to the second region.

5. The screen mirroring method of claim 4, further comprising:
encoding and multiplexing the high image-quality data and the low image-quality data to generate a transport stream,
wherein the transmitting comprises transmitting, by the master device (110), the transport stream to the client device (120).

## Patentansprüche

1. Master-Vorrichtung (110), aufweisend:
eine Anzeigeeinheit (320);
einen Arbeitsspeicher (335), der einen Rahmenpuffer aufweist, der konfiguriert ist, um Pixeldaten zu speichern;
eine Steuereinheit (315), die konfiguriert ist, um die Anzeigeeinheit (32) zu steuern, einen Bildschirm anzuzeigen;
und eine Kommunikationseinheit (325), die konfiguriert ist zum:
Kommunizieren mit einer Client-Vorrichtung (120);
und als Teil eines Spiegelungsdienstes Übertragen (505) von Daten, die dem gesamten angezeigten Bildschirm entsprechen, zu der Client-Vorrichtung (120);
wobei die Steuereinheit (315) ferner konfiguriert ist zum:
Empfangen (510), nach Beendigung des Spiegelungsdienstes, von Spiegelungsbildschirminformationen, die Informationen enthalten, die eine Position eines ersten Bereichs des gesamten angezeigten Bildschirms angeben, von der Client-Vorrichtung (120);
Generieren (521) von Daten mit hoher Bildqualität des ersten Bereichs unter Verwendung von gespeicherten Pixeldaten, die dem ersten Bereich entsprechen, auf Grundlage der Informationen, die die Position des ersten Bereichs angeben;
und Bestimmen eines zweiten Bereichs des gesamten angezeigten Bildschirms auf Grundlage der Informationen, die die Position des ersten Bereichs angeben, und Generieren (522) von Daten mit niedriger Bildqualität des zweiten Bereichs unter Verwendung von gespeicherten Pixeldaten, die dem zweiten Bereich entsprechen, wobei der zweite Bereich dem gesamten angezeigten Bildschirm mit Ausnahme des ersten Bereichs entspricht;
und wobei die Kommunikationseinheit (325) ferner konfiguriert ist, um die Daten mit hoher Bildqualität und die Daten mit niedriger Bildqualität zu der Client-Vorrichtung (120) zu übertragen;
und wobei die gespeicherten Pixeldaten die gespeicherten Pixeldaten enthalten, die dem ersten Bereich entsprechen, und die gespeicherten Pixeldaten, die dem zweiten Bereich entsprechen.

2. Master-Vorrichtung (110) nach Anspruch 1, wobei die Steuereinheit (315) konfiguriert ist, um die Daten mit hoher Bildqualität und die Daten mit niedriger Bildqualität zu encodieren und zu multiplexen, um einen Transportstrom zu generieren, und die Kommunikationseinheit (325) konfiguriert ist, um den Transportstrom zu der Client-Vorrichtung (120) zu übertragen.

3. Master-Vorrichtung (310) nach Anspruch 1, wobei die Steuereinheit (315) ferner konfiguriert ist, um mindestens eine Auflösung, eine Bitrate oder eine Rahmenrate anzupassen, um die Daten mit hoher Bildqualität und die Daten mit niedriger Bildqualität zu generieren.

4. Bildschirmspiegelungsverfahren einer Master-Vorrichtung (110) nach einem der Ansprüche 1 bis 3, wobei das Verfahren aufweist:
ein Anzeigen eines Bildschirms auf einer Anzeigeeinheit (320);
ein Kommunizieren mit einer Client-Vorrichtung (120) durch die Kommunikationseinheit (325);
als Teil eines Spiegelungsdienstes ein Übertragen (505) von Daten, die dem gesamten angezeigten Bildschirm entsprechen, zu der Client-Vorrichtung (120);
ein Empfangen (510), nach Beendigung des Spiegelungsdienstes, von Spiegelungsbildschirminformationen, die Informationen enthalten, die eine Position eines ersten Bereichs des gesamten angezeigten Bildschirms angeben, von der Client-Vorrichtung (120);
ein Generieren (521) von Daten mit hoher Bildqualität des ersten Bereichs unter Verwendung von gespeicherten Pixeldaten, die dem ersten Bereich entsprechen, auf Grundlage der Informationen, die die Position des ersten Bereichs angeben;
ein Bestimmen eines zweiten Bereichs des gesamten angezeigten Bildschirms auf Grundlage der Informationen, die die Position des ersten Bereichs angeben, und ein Generieren (522) von Daten mit niedriger Bildqualität des zweiten Bereichs unter Verwendung von gespeicherten Pixeldaten, die dem zweiten Bereich entsprechen, wobei der zweite Bereich dem gesamten angezeigten Bildschirm mit Ausnahme des ersten Bereichs entspricht;
und durch die Kommunikationseinheit (525) ein Übertragen der Daten mit hoher Bildqualität und der Daten mit niedriger Bildqualität zu der Client-Vorrichtung (120);
wobei die gespeicherten Pixeldaten die gespeicherten Pixeldaten enthalten, die dem ersten Bereich entsprechen, und die gespeicherten Pixeldaten, die dem zweiten Bereich entsprechen.

5. Bildschirmspiegelungsverfahren nach Anspruch 4, ferner aufweisend:
ein Encodieren und Multiplexen der Daten mit hoher Bildqualität und der Daten mit niedriger Bildqualität, um einen Transportstrom zu generieren, wobei das Übertragen ein Übertragen des Transportstroms durch die Master-Vorrichtung (110) zu der Client-Vorrichtung (120) aufweist.

## Revendications

1. Dispositif maître (110) comprenant :
une unité d'affichage (320) ;
une mémoire (335) comprenant un tampon de trame configuré pour stocker des données de pixels ;
une unité de commande (315) configurée pour commander l'unité d'affichage (32) pour afficher un écran ; et
une unité de communication (325) configurée pour :
communiquer avec un dispositif client (120) ; et
transmettre (505), au dispositif client (120) dans le cadre d'un service de miroitage, les données correspondant à l'écran entier affiché ;
ladite unité de commande (315) étant en outre configurée pour :
recevoir (510), en provenance du dispositif client (120) après la fin du service de miroitage, des informations d'écran de miroitage comprenant des informations indiquant la position d'une première zone de l'écran entier affiché ;
générer (521) des données de qualité d'image élevée de la première zone à l'aide des données de pixels stockées correspondant à la première zone, sur la base des informations indiquant la position de la première zone ; et
déterminer une seconde zone de l'écran entier affiché sur la base des informations indiquant la position de la première zone, et générer (522) des données de qualité d'image faible de la seconde zone à l'aide des données de pixels stockées correspondant à la seconde zone, ladite seconde zone correspondant à l'écran entier affiché à l'exclusion de la première zone ; et
ladite unité de communication (325) étant en outre configurée pour transmettre les données de qualité d'image élevée et les données de qualité d'image faible au dispositif client (120) ; et
lesdites données de pixels stockées comprenant les données de pixels stockées correspondant à la première zone et les données de pixels stockées correspondant à la seconde zone.

2. Dispositif maître (110) selon la revendication 1,
ladite unité de commande (315) étant configurée pour coder et multiplexer les données de qualité d'image élevée et les données de qualité d'image faible pour générer un flux de transport, et ladite unité de communication (325) étant configurée pour transmettre le flux de transport au dispositif client (120).

3. Dispositif maître (310) selon la revendication 1, ladite unité de commande (315) étant configurée pour régler au moins l'un d'une résolution, d'un débit binaire et d'une fréquence de trame pour générer les données de qualité d'image élevée et les données de qualité d'image faible.

4. Procédé de miroitage d'écran d'un dispositif maître (110) selon l'une quelconque des revendications 1 à 3, le procédé comprenant :
l'affichage, sur l'unité d'affichage (320), d'un écran ;
la communication, par l'unité de communication (325), avec un dispositif client (120) ;
la transmission (505), au dispositif client (120) dans le cadre d'un service de miroitage, des données correspondant à l'écran entier affiché ;
la réception (510), en provenance du dispositif client (120) après la fin du service de miroitage, d'informations d'écran de miroitage comprenant des informations indiquant la position d'une première zone de l'écran affiché entier ;
la génération (521) de données de qualité d'image élevée de la première zone à l'aide des données de pixels stockées correspondant à la première zone, sur la base des informations indiquant la position de la première zone ;
la détermination d'une seconde zone de l'écran entier affiché sur la base des informations indiquant la position de la première zone, et la génération (522) de données de qualité d'image faible de la seconde zone à l'aide des données de pixels stockées correspondant à la seconde zone, ladite seconde zone correspondant à l'écran entier affiché à l'exclusion de la première zone ; et
la transmission, par l'unité de communication (525), des données de qualité d'image élevée et des données de qualité d'image faible au dispositif client (120) ;
lesdites données de pixels stockées comprenant les données de pixels stockées correspondant à la première zone et les données de pixels stockées correspondant à la seconde zone.

5. Procédé de miroitage d'écran selon la revendication 4, comprenant en outre :
le codage et le multiplexage des données de qualité d'image élevée et des données de qualité d'image faible pour générer un flux de transport,
ladite transmission comprenant la transmission, par le dispositif maître (110), du flux de transport au dispositif client (120).
